# EUROPEAN PATENT SPECIFICATION

(11) **EP 0 908 107 B1**
(45) Date of publication and mention of the grant of the patent: **19.11.2003**
(21) Application number: 98116450.2
(22) Date of filing: 31.08.1998
(51) Int. Cl.: A23L 1/236

(54) **Sweetening compositions containing neohesperidin-dihydrochalcone and at least another high-intensity sweetener**
Süssstoffmischung, welche Neohesperidin-dihydrochalcon und mindestens einen weiteren Süssstoff enthält
Préparation édulcorante contenant du néohespéridine-dihydrochalcone et au moins un autre édulcorant puissant

(30) Priority: 16.09.1997 ES 9701939
(43) Date of publication of application: 14.04.1999
(73) Proprietor: ZOSTER, S.A., E-30588 Zeneta (Murcia) (ES)
(72) Inventor: Foguet, Rafael, 08022 Barcelona (ES); Borrego, Francisco, 30150 La Alberca, Murcia (ES); Campos, Juan, 30720 Santiago Ribera, Murcia (ES); Montijano, Helena, 30150 Los Garres, Murcia (ES)
(74) Representative: Kinzebach, Werner, Dr.

(56) References cited:
- EP-A- 0 507 598
- US-A- 3 653 923
- US-A- 4 158 068
- US-A- 5 192 563
- DATABASE WPI Section Ch, Week 198218 Derwent Publications Ltd., London, GB; Class B05, AN 1982-36545E XP002164284 & JP 50 148560 A (TORAY IND INC), 28 November 1975 (1975-11-28)

## Description

The invention relates to new sweetening compositions with instantaneous solubility in water enhanced by neohesperidin dihydrochalcone and at least another high-intensity sweetener as well as their process for preparation, their use as sweetening agents and the products containing them. As high-intensity sweetening agents within the scope of the present invention there can be mentioned saccharin, cyclamate, acesulphame and their acceptable salts for use in human beings and animals. The new compositions can be used for sweetening any type of foods, beverages, pharmaceutical, veterinary and cosmetic preparations, and feedstuffs. The solubility and solubilization rate in water of the new compositions provided by the present invention are significantly higher than those of neohesperidin dihydrochalcone by itself to such extent that they can be classified as instantaneous solubility compositions.

Neohesperidin dihydrochalcone is a high-intensity sweetener and flavour modulator that can be prepared from certain flavonoids found in citrus fruits (Bär A. et al. *Lebensmittel Wissenchaft und Technologie* (1990) 23, 371-376; Horowitz R.M. and Gentili B. In: *Alternative Sweeteners* (1991), 2nd Edition, Nabors L.O. and Gelardi R.C. (Eds.), pp. 97-116, Marcel Dekker Inc., N.Y.). The preparation of neohesperidin dihydrochalcone has been disclosed in several patents, US 3087821, US 3375242, JP 48/57960, GB 1443310, JP 50/149635, JP 50/154261 and ES 545276. According to JP 50/148560 A, the solubility of dihydrochalcone-type sweetening agents may be improved by dissolving said agent in an alcohol followed by removing said alcohol and subsequent drying.

The use of neohesperidin dihydrochalcone as a sweetener in foods has been described in US Patent No. 4087588 and by Montijano H. and Borrego, F. In: LFRA Ingredients Handbook (Sweeteners), 1996, Dalzell J. (Eds.), Leatherhead Food Research Association, pp. 181-200.

At present, it is a current practice to use sweetening combinations in order to improve the sweetness profile and decrease the perception of bitter flavour or other undesirable phenomena. These sweetening combinations can be usually prepared by simple admixture of individual ingredients. The main disadvantage of the so-produced sweetening combinations is a possible disaggregation of their individual ingredients. Synergism is also a usual property of binary sweetening combinations. Thus, neohesperidin dihydrochalcone has been reported to show important synergic effects in combination with saccharin (US Patent No. 3653923) sodium cyclamate (US 5192563 A), acetosulfam (US 4158068 A) and sucralose (EP 507 598), as well as with other high-intensity sweeteners, sugars, and polyols (Schif fman S.S. et al . *Brain Research Bulletin* (1995) 38, pp.105-220).

The use of neohesperidin dihydrochalcone at low concentrations as a flavour modifier has been described in BP 500977 and US Patent No. 5300309. In addition, WO Patent 96/17527 relates to combinations of neohesperidin dihydrochalcone with (a) maltol, (b) ethyl maltol and (c) maltol and ethyl maltol to modify the flavour of neohesperidin dihydrochalcone.

One of the essential requirements to be taken into account for the choice of a high-intensity sweetener is that its solubility in water is elevated at ambient temperature. The solubility of neohesperidin dihydrochalcone in water is low, 0.4 - 0.5 g/L, and its solubilization rate is also low (Montijano H. and Borrego, F. In: LFRA Ingredients Handbook (Sweeteners), 1996, Dalzell J. (Eds.), Leatherhead Food Research Association, pp. 181-200. This low solubility and solubilization rate of neohesperidin dihydrochalcone limit its use, since they hinder certain processes for preparing products sweetened with neohesperidin dihydrochalcone and make it impossible to prepare syrups and concentrates with such a sweetener. To this purpose, monobasic salts of neohesperidin dihydrochalcone with higher solubility than the starting dihydrochalcone have been described (US Patents Nos. 3984394 and 4031260). However, these salts exhibit an elevated degree of instability, even in solid form, due to their strongly alkaline nature, which make the applicability of these salts be very restrictive.

US Patent No. 4254155 and US Patent No. 4304794 disclose soluble combinations of neohesperidin dihydrochalcone with polyhydroxylated compounds such as glycerol, sugars, arabic gum, carrageenan, carboxylmethylcellulose,pectin, etc., with sensory properties that are also optimized with respect to the starting compound. The main disadvantage of these combinations is that they contain substances whose function is alien to the process itself for sweetening such products as foods, feedstuffs, pharmaceutical and veterinary preparations.

Consequently, available improved combinations of neohesperidin dihydrochalcone enhancing its solubility in water at ambient temperature are necessary.

The applicants have surprisingly found out that certain combinations of neohesperidin dihydrochalcone with other high-intensity sweeteners can be prepared in such a way that the solubility properties of neohesperidin dihydrochalcone in the end product are significantly improved with respect to the pure product.

Thus, the present invention relates to new sweetening compositions with neohesperidin dihydrochalcone and at least another high-intensity sweetener.

Said sweetening compositions of instantaneous solubility in water contain neohesperidin dihydrochalcone and at least one other high-intensity sweetener, wherein the weight ratio of neohesperidin dihydrochalcone to the other sweeteners is between 1:999 and 1:4,5, which compositions are obtainable by incorporating either 1 part by weight of neohesperidin dihydrochalcone in an aqueous solution containing from 4,5 to 999 parts by weight of the other sweeteners, or 4,5 to 999 parts by weight of the other sweeteners in a solution of 1 part by weight of neohesperidin dihydrochalcone in a suitable solvent other than water, and then removing the water or solvent.

The invention also relates to a process for preparing such compositions and their use to sweeten products in which high-intensity sweeteners are currently used.

Said process comprises incorporating either 1 part by weight of neohesperidin dihydrochalcone in an aqueous solution containing from 4,5 to 999 parts by weight of other sweeteners, or 4,5 to 999 parts by weight of other sweeteners in a solution of 1 part by weight of neohesperidin dihydrochalcone in a suitable solvent other than water, and then removing the water or solvent. The ingredients can be added in inverted order.

The main characteristic of these new compositions is that their solubility and dissolution rate in water at ambient temperature are remarkably higher than those of neohesperidin dihydrochalcone by itself, which enables these compositions to be classif ied as instantaneous solubility compositions. In addition, these compositions, in comparison to other previously described compositions, have the advantage that they are with high-intensity sweeteners and can be prepared by simple and widely used methods.

In agreement with the present invention, the low solubility and solubilization rate of neohesperidin dihydrochalcone in water can be substantially compensated by the use of the compositions of the present invention. In this way, the solubility of neohesperidin dihydrochalcone in water can increase until about 165 times depending on the specific combination. This facilitates its handling in industrial processes.

The present invention also relates to a process for preparing such sweetening compositions by means of the dissolution of neohesperidin dihydrochalcone (a) in a concentrated aqueous solution of other high-intensity sweetener (b), and subsequent codrying of the combination, in order to form an homogenous powder which is more soluble in water than the individual ingredients.

The high-intensity sweetener can contain, for example, saccharin, cyclamate, acesulphame and their acceptable salts for the consumption of human beings and animals. The terms saccharin and cyclamate used in this invention are specifically referred to saccharin and cyclamate either in acid form or in form of their ammonium salts, alkali metal salts such as the sodium or potassium salt, or alkaline earth metal salts such as the calcium or magnesium salts. As for the acesulphame, its potassium salt is preferred.

This method of preparation can be modified by using other suitable solvents, such as, for example, alcohols, and even by keeping ingredient (a) of the composition in suspension in a solution of (a). Likewise, the liquid medium, in which ingredients (a) and (b) are dissolved can be used directly, for example, in a process leading to a close association of the ingredients, such as the spray-drying process. An expert in the art can easily determine what conditions a spray-drying process can be carried out on.

The weight ratio of the ingredients (a) and (b) of the sweetening composition of this invention, i.e. of neohesperidin dihydrochalcone sweetening agent to other high-intensity sweetener, is in the range of 1:999 to 1:4.5 , most preferably between 1:99 and 1:7. In addition, the present invention provides a method for use of the preparation produced according to the process herein disclosed.

The applicants have found out that the solubility and solubilization rate of neohesperidin dihydrochalcone in such sweetening compositions increase to a great extent. The solubility of neohesperidin dihydrochalcone is therefore higher than that expected from its intrinsic solubility or from its preparations obtained by a simple admixture of its ingredients. This effect is surprising and specific, which is not observed in associations produced by the method disclosed for other sweeteners.

The sweetening compositions prepared in accordance with the process disclosed in the present invention have the additional advantage, as compared with admixtures of the individual ingredients, that they are not disaggregated into their ingredients.

The sweetening compositions provided by the present invention can be used for sweetening a wide variety of products. Thus, they can be used for sweetening any product in which high-intensity sweeteners are currently used or for producing table sweeteners. Examples of such products are solid and liquid foods and beverages such as milk products (yoghurt, batters, cream custards), coffee, tea, cocoa, instant drinks, fizzy drinks, fruit juices, fruit juice drinks, alcoholic drinks (aperitifs, bitters, liqueurs), baked goods (biscuits, cakes), confectioneries (sweets, jellies, chocolates), chewing gums. Examples of other products which can be sweetened using the present compositions are those for animal feeding (fodder), pharmaceutical and veterinary preparations and cosmetic preparations (oral hygiene agents). Thus, the present invention also relates to an alimentary, pharmaceutical, cosmetic, veterinary product or feedstuff sweetened with a composition according to the invention.

The sweetening compositions provided by this invention can be used to sweeten products *per se ,* for example, by admixture with the product to be sweetened in a wide variety of physical forms such as powders, tablets, coated-tablets, granules, etc., and in combination with carriers (starch, dextrines and other modified starchs, sorbitol, xylitol, maltitol, glucose, fructose, citric acid, sodium chloride calcium phosphate, etc.) and adjuvants (bicarbonates, carbohydrates, etc.) or other non-toxic substances compatible with the product to be sweetened.

The present invention is illustrated by the following examples.

### EXAMPLE 1: Composition of neohesperidin dihydrochalcone: potassium acesulphame (7:93)

93 g of potassium acesulphame were dissolved in 107 ml of water under gentle stirring and heating (50°C). Once a limpid solution was obtained, 7 g of neohesperidin dihydrochalcone were added and stirred until complete dissolution, and then the water was removed in vacuo. A whitish solid was obtained corresponding to the composition neohesperidin dihydrochalcone:potassium acesulphame (7:93) with a solubility in water at room temperature over 140 g /l (equivalent solubility of neohesperidin dihydrochalcone was higher than 10 g/l).

### EXAMPLE 2: Composition of neohesperidin dihydrochalcone: sodium cyclamate (10:90)

In a 1-litre flat-bottomed round flask 20 g of neohesperidin dihydrochalcone were weighed and brought to volume with 400 g of methanol under stirring until complete dissolution. 180 g of anhydrous sodium cyclamate were added and stirred for 30 minutes. The sodium cyclamate remained in suspension in the methanol solution of neohesperidin dihydrochalcone. The solvent was evaporated at 40-45°C. The solid obtained corresponds to the composition of neohesperidin dihydrochalcone:sodium cyclamate (10:90) with a solubility in water at room temperature up to 200 g/l, which is indicative of an equivalent solubility of neohesperidin dihydrochalcone up to 20 g/l.

### EXAMPLE 3: Composition of neohesperidin dihydrochalcone: sodium saccharin (12:88)

88 g of sodium saccharin were weighed and dissolved in 150 g of water under stirring at room temperature. Then, 12 g of neohesperidin dihydrochalcone were added and stirred until complete dissolution. Once the solvent was removed in vacuo, a whitish powder was obtained corresponding to the composition neohesperidin dihydrochalcone:sodium saccharin (12:88) with a solubility in water at room temperature over 500g/l (equivalent solubility of neohesperidin dihydrochalcone was higher than 60 g/l).

### EXAMPLE 4: Composition of neohesperidin dihydrochalcone: sodium cyclamate:sodium saccharin (3:79:18)

131.7 g of anhydrous sodium cyclamate and 30 g of sodium saccharin were dissolved in 338.3 ml of water under gentle stirring and heating (50°C). Once a limpid solution was obtained, 5 g of neohesperidin dihydrochalcone were added and stirred until complete dissolution, and then the water was removed in vacuo. A whitish solid was obtained corresponding to the composition neohesperidin dihydrochalcone:sodium cyclamate:sodium saccharin (3:79:18) with a solubility in water at room temperature over 430 g /l, from which the equivalent solubility of neohesperidin dihydrochalcone was increased 13 times.

## Claims

1. Sweetening compositions of instantaneous solubility in water containing neohesperidin dihydrochalcone and at least one other high-intensity sweetener, wherein the weight ratio of neohesperidin dihydrochalcone to the other sweeteners is between 1:999 and 1:4,5, which compositions are obtainable by incorporating either 1 part by weight of neohesperidin dihydrochalcone in an aqueous solution containing from 4,5 to 999 parts by weight of the other sweeteners, or 4,5 to 999 parts by weight of the other sweeteners in a solution of 1 part by weight of neohesperidin dihydrochalcone in a suitable solvent other than water, and then removing the water or solvent.

2. The composition of claim 1, wherein the other high-intensity sweetener is saccharin, cyclamate or acesulphame as well as their salts acceptable for use in human beings and animals.

3. The composition of claim 1 or 2, wherein the weight ratio of neohesperidin dihydrochalcone to the other sweetener is between 1:99 and 1:7.

4. A process for preparing a composition of any one of claims 1 to 3 which comprises incorporating either 1 part by weight of neohesperidin dihydrochalcone in an aqueous solution containing from 4,5 to 999 parts by weight of other sweeteners, or 4,5 to 999 parts by weight of other sweeteners in a solution of 1 part by weight of neohesperidin dihydrochalcone in a suitable solvent other than water, and then removing the water or solvent.

5. The process of claim 4, wherein the order of addition of the ingredients is inverted.

6. The use of a composition according to any one of claims 1 to 3 for sweetening.

7. An alimentary, pharmaceutical, cosmetic, veterinary product or feedstuff sweetened with a composition according to any one of claims 1 to 3.

## Patentansprüche

1. Süßungsmittel mit unmittelbarer Löslichkeit in Wasser, enthaltend Neohesperidindihydrochalkon und wenigstens einen weiteren intensitätsstarken Süßstoff, wobei das Gewichtsverhältnis von Neohesperidindihydrochalkon zu den weiteren Süßstoffen bei 1:999 bis 1:4,5 liegt und die Mittel erhältlich sind, indem man entweder 1 Gewichtsteil Neohesperidindihydrochalkon in eine wässrige Lösung, die 4,5 bis 999 Gewichtsteile der weiteren Süßstoffe enthält, oder 4,5 bis 999 Gewichtsteile der weiteren Süßstoffe in eine Lösung von 1 Gewichtsteil Neohesperidindihydrochalkon in einem geeigneten, von Wasser verschiedenen Lösungsmittel einbringt, und dann das Wasser oder Lösungsmittel entfernt.

2. Mittel nach Anspruch 1, worin der weitere intensitätsstarke Süßstoff Saccharin, Cyclamat oder Acesulfam bzw. ein für die Verwendung bei Menschen und Tieren verträgliches Salz davon ist.

3. Mittel nach Anspruch 1 oder 2, wobei das Gewichtsverhältnis von Neohesperidindihydrochalkon zum weiteren Süßstoff 1:99 bis 1:7 beträgt.

4. Verfahren zur Herstellung eines Mittels nach einem der Ansprüche 1 bis 3, wobei man entweder 1 Gewichtsteil Neohesperidindihydrochalkon in eine wässrige Lösung, die 4,5 bis 999 Gewichtsteile der weiteren Süßstoffe enthält, oder 4,5 bis 999 Gewichtsteile der weiteren Süßstoffe in eine Lösung von 1 Gewichtsteil Neohesperidindihydrochalkon in einem geeigneten, von Wasser verschiedenen Lösungsmittel einbringt, und dann das Wasser oder Lösungsmittel entfernt.

5. Verfahren nach Anspruch 4, wobei die Reihenfolge, in der man die Inhaltsstoffe zugibt, vertauscht ist.

6. Verwendung eines Mittels nach einem der Ansprüche 1 bis 3 zum Süßen.

7. Alimentäres, pharmazeutisches, kosmetisches oder tierärztliches Produkt oder Futtermittel, das mit einem Mittel nach einem der Ansprüche 1 und 3 gesüßt ist.

## Revendications

1. Compositions sucrantes de solublité instantanée dans l'eau contenant néohespéridine dihydrochalcone et au moins un autre édulcorant d'haute intensité, en ce que le ratio de poids de la néohespéridine dihydrochalcone aux autres édulcorants est entre 1:999 et 1:4,5, dont les compositions son obtenibles en incorporant soit 1 partie à poids de néohespéridine dihydrochalcone dans une solution aqueuse contenant de 4,5 à 999 parties à poids des autres édulcorants, soit 4,5 à 999 parties à poids des autres édulcorants dans une solution de 1 partie à poids de néohespéridine dihydrochalcone dans un solvant approprié, différent de l'eau, et élimination finale de l'eau ou le solvant.

2. La composition de la revendication 1, **caracterisée en ce que** l'autre édulcorant d'haute intensité est la saccharine, le cyclamate ou l'acésulfame, ainsi que leurs sels acceptables chez l'homme et animaux.

3. La composition des revendications 1 ou 2, **caracterisée en ce que** le ratio de poids de la néohespéridine dihydrochalcone au autre édulcorant est entre 1:99 et 1:7.

4. Procédé de préparation d'une composition selon les revendications 1, 2 ou 3, **caracterisé en ce qu'**il consiste à incorporer soit 1 partie à poids de néohespéridine dihydrochalcone dans une solution aqueuse contenant de 4,5 à 999 parties à poids d'autres édulcorants, soit de 4,5 à 999 parties à poids d'autres édulcorants dans une solution de 1 partie à poids de néohespéridine dihydrochalcone dans un solvant approprié, différent à l'eau, et élimination finale de l'eau ou le solvant.

5. Le procédé de la revendication 4, **caracterisé en ce que** l'addition des ingredients s'effectue dans l'ordre inverse.

6. L'utilisation d'une composition selon les revendications 1, 2 ou 3 pour édulcoration.

7. Un produit alimentaire, pharmaceutique, cosmétique, vétérinaire ou aliment pour des animaux sucré avec une composition selon les revendications 1, 2 ou 3.
